# FASCICULE DE BREVET EUROPEEN

(11) **EP 1 611 225 B1**
(45) Date de publication et mention de la délivrance du brevet: **24.02.2010**
(21) Numéro de dépôt: 04742380.1
(22) Date de dépôt: 01.04.2004
(51) Int. Cl.: C10L 1/10, B01J 13/00

(54) **DISPERSION COLLOIDALE D'UN COMPOSE D'UNE TERRE RARE COMPRENANT UN AGENT ANTI-OXYDANT ET SON UTILISATION COMME ADJUVANT DE GAZOLE POUR MOTEURS À COMBUSTION INTERNE**
KOLLOIDDISPERSION AUS EINER ZUSAMMENSETZUNG VON SELTENEN ERDEN, DIE EINEN OXYDATIONSINHIBITOR ENTHÄLT, UND IHRE VERWENDUNG ALS GASÖL ZUSATZSTOFF FÜR OTTOMOTOREN
COLLOIDAL DISPERSION OF A RARE EARTH COMPOUND COMPRISING AN ANTI-OXIDANT AGENT AND USE THEREOF AS ADDITIVE FOR DIESEL FUEL FOR INTERNAL COMBUSTION ENGINES

(30) Priorité: 04.04.2003 FR 0304226
(43) Date de publication de la demande: 04.01.2006
(73) Titulaire: Rhodia Electronics and Catalysis, 17041 La Rochelle Cedex (FR)
(72) Inventeur: BLANCHARD, Gilbert, F-60330 Lagny-le-Sec (FR)
(74) Mandataire: Dubruc, Philippe
(86) Numéro de dépôt international: PCT/FR2004/000776
(87) Numéro de publication internationale: WO 2004/089528

(56) Documents cités:
- EP-A- 0 671 205
- WO-A-00/49098
- WO-A-01/10545
- WO-A-96/21708
- WO-A-96/28524
- WO-A-97/19022

## Description

La présente invention concerne une dispersion colloïdale d'un composé d'une terre rare comprenant un agent anti-oxydant et son utilisation comme adjuvant de gazoles pour moteurs à combustion interne.

On sait que lors de la combustion du gazole dans le moteur diesel, les produits carbonés ont tendance à former des suies, qui sont réputées nocives tant pour l'environnement que pour la santé. On recherche depuis longtemps des techniques qui permettent de réduire l'émission de ces particules carbonées.

Une solution satisfaisante consiste à introduire dans les suies des catalyseurs qui permettent une auto-inflammation fréquente de celles-ci collectées dans le filtre. Pour cela, il faut que ces suies présentent une température d'auto-inflammation suffisamment basse pour être fréquemment atteinte pendant une marche normale du moteur.

On sait que des dispersions de composés de terre rare, utilisées comme adjuvant des carburants, peuvent contribuer à la réduction de la température d'auto-inflammation des suies.

Ces dispersions doivent présenter notamment une stabilité élevée, on entend par là que le composé de terre rare doit rester en suspension dans le carburant et non pas précipiter lorsque la dispersion est mise en contact avec celui-ci. Or, on s'est aperçu que cette stabilité pouvait dépendre de la qualité des gazoles, notamment des additifs qui peuvent entrer dans la composition de ceux-ci. Il est donc particulièrement intéressant de pouvoir disposer d'une dispersion qui soit stable quelle que soit la qualité du gazole utilisé.

L'objet de l'invention est de fournir une telle dispersion.

Dans ce but, la dispersion de l'invention, qui est du type comprenant des particules d'un composé d'une terre rare, un acide et une phase organique, est caractérisée en ce qu'elle comprend en outre un agent anti-oxydant.

La présence d'un agent anti-oxydant a pour avantage de rendre la stabilité de la dispersion de l'invention indépendante du gazole dans laquelle celle-ci est incorporée.

D'autres caractéristiques, détails et avantages de l'invention apparaîtront encore plus complètement à la lecture de la description qui va suivre, ainsi que des divers exemples concrets mais non limitatifs destinés à l'illustrer.

Pour la suite de la description, on entend par terre rare les éléments du groupe constitué par l'yttrium et les éléments de la classification périodique de numéro atomique compris inclusivement entre 57 et 71. La classification périodique des éléments à laquelle il est fait référence est celle publiée dans le Supplément au Bulletin de la Société Chimique de France n° 1 (janvier 1966).

On va décrire ci-dessous plus précisément les dispersions colloïdales auxquelles l'invention peut s'appliquer.

L'expression « dispersion colloïdale d'un composé à base d'une terre rare » désigne tout système constitué de fines particules solides de dimensions colloïdales à base dudit composé, en suspension dans une phase liquide, lesdites particules pouvant, en outre, éventuellement contenir des quantités résiduelles d'ions liés ou adsorbés tels que par exemple des nitrates, des acétates, des citrates ou des ammoniums. Par dimensions colloïdales, on entend des dimensions comprises entre environ 1nm et environ 500nm. Les particules peuvent plus particulièrement présenter une taille moyenne d'au plus 250 nm environ, notamment d'au plus 100 nm, de préférence d'au plus 20 nm et encore plus préférentiellement d'au plus 15 nm. Les dimensions ci-dessus sont déterminées par microscopie électronique à transmission (MET). On notera que dans de telles dispersions, la terre rare peut se trouver soit totalement sous la forme de colloïdes, soit simultanément sous la forme d'ions et sous la forme de colloïdes.

Le composé de terre rare est généralement un oxyde et/ou un oxyde hydraté (hydroxyde).

En ce qui concerne la terre rare, celle-ci peut être plus particulièrement choisie parmi le cérium, le lanthane, l'yttrium, le néodyme, le gadolinium, et le praséodyme. De préférence, la terre rare est choisie parmi le cérium, le lanthane, l'yttrium et le praséodyme.

On notera que les dispersions colloïdales selon l'invention peuvent comporter un composé qui peut être à base de deux ou de plusieurs terres rares.

Dans le cas d'un composé à base d'au moins deux terres rares, lesdites terres rares peuvent présenter des degrés d'oxydation différents. Le degré d'oxydation des terres rares est en général égal à 3 ou 4.

Dans le cas particulier où la terre rare est le cérium, celui ci est principalement sous forme de cérium IV. Par exemple, la teneur en cérium III par rapport au cérium IV (teneur exprimée par le rapport atomique. Ce III/Ce total) est généralement d'au plus 40%. Elle peut varier en fonction des modes de réalisation des dispersions utilisées et être ainsi d'au plus 5%, plus particulièrement d'au plus 1 %, et encore plus particulièrement d'au plus 0,5%.

Selon un mode de réalisation particulier de l'invention, les dispersions colloïdales peuvent aussi comporter au moins un autre élément (E) choisi dans les groupes IIA, IVA, VIIA, VIII, IB, IIB, IIIB et IVB de la classification périodique des éléments.

A ce titre, on peut mentionner plus particulièrement le fer, le cuivre, le strontium, le zirconium, le titane, le gallium, le palladium, le manganèse.

En ce qui concerne les proportions respectives des éléments rentrant dans la composition de(s) composé(s) mentionné(s) précédemment, en cas de présence d'au moins une terre rare avec au moins un élément (E), la proportion en terre(s) rare(s) est de préférence d'au moins 10 %, plus particulièrement d'au moins 20 %, et encore plus particulièrement d'au moins 50 %, en mole par rapport au nombre total de moles d'élément(s) de terre(s) rare(s) et de (E) exprimés en oxyde.

Outre les particules mentionnées ci-dessus, la dispersion colloïdale selon l'invention comporte au moins un acide, avantageusement amphiphile. L'acide est plus particulièrement choisi parmi ceux qui comportent au moins 6 atomes de carbone, encore plus particulièrement de 10 à 60 atomes de carbone, de préférence de 15 à 25 atomes de carbone.

Ces acides peuvent être linéaires ou ramifiés. Ils peuvent être des acides aryliques, aliphatiques ou arylaliphatiques, portant éventuellement d'autres fonctions à condition que ces fonctions soient stables dans les milieux où l'on désire utiliser les dispersions selon la présente invention. Ainsi, on peut mettre en oeuvre par exemple des acides carboxyliques aliphatiques, des acides sulfoniques aliphatiques, des acides phosphoniques aliphatiques, des acides alcoylarylsulfoniques et des acides alcoylarylphosphoniques possédant environ de 10 à environ de 40 atomes de carbone, qu'ils soient naturels ou synthétiques. Il est bien entendu possible d'utiliser les acides en mélange.

On peut aussi utiliser des acides carboxyliques dont la chaîne carbonée porte des fonctions cétoniques comme les acides pyruviques substitués en alpha de la fonction cétone. Cela peut être également des acides alphahalogéno carboxyliques ou des acides alpha-hydroxycarboxyliques. La chaîne rattachée au groupe carboxylique peut porter des insaturations. Toutefois en général on tend à éviter de trop nombreuses doubles liaisons car le cérium catalyse la réticulation des doubles liaisons. La chaîne peut être interrompue par des fonctions éther ou ester à condition de ne pas trop altérer la lipophilicité de la chaîne porteuse du groupe carboxylique.

A titre d'exemple, on peut citer les acides gras de tallol, d'huile de soja, de suif, d'huile de lin, l'acide oléique, l'acide linoléique, l'acide stéarique et ses isomères, l'acide pélargonique, l'acide caprique, l'acide laurique, l'acide myristique, l'acide dodécylbenzènesulfonique, l'acide éthyl-2 hexanoïque, l'acide naphténique, l'acide hexoïque, l'acide toluène sulfonique, l'acide toluène phosphonique, l'acide lauryl sulfonique, l'acide lauryl phosphonique, l'acide palmityl sulfonique, et l'acide palmityl phosphonique.

Dans le cadre de la présente invention, le terme " acide amphiphile " peut également désigner d'autres agents amphiphiles comme par exemple les alkyl éthers phosphates polyoxyéthylénés. On entend ici les phosphates de formule : 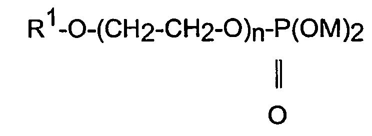 ou encore les phosphates de dialcoyle polyoxyéthylénés de formule : 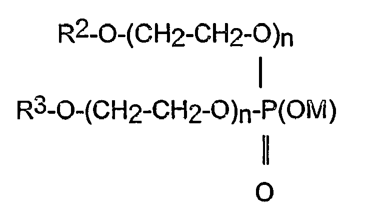 dans lesquelles :
■ R¹, R2, R3, identiques ou différents représentent un radical alkyl linéaire ou ramifié, notamment de 2 à 20 atomes de carbone; un radical phényle; un radical alkylaryl, plus particulièrement un radical alkylphényl, avec notamment une chaîne alkyle de 8 à 12 atomes de carbone; un radical arylalkyle, plus particulièrement un radical phénylaryl;
■ n le nombre d'oxyde d'éthylène pouvant aller de 0 à 12 par exemple;
■ M représente un atome d'hydrogène, de sodium ou de potassium.

Le radical R¹ peut être notamment un radical hexyle, octyle, décyle, dodécyle, oléyle, nonylphényle.

On peut citer comme exemple de ce type de composés amphiphiles ceux commercialisés sous les marques Lubrophos® et Rhodafac® vendu par Rhodia et notamment les produits ci-dessous :
- les poly-oxy-éthylène alkyl (C8-C10) éthers phosphates Rhodafac® RA 600
- le poly-oxyéthylène tridécyl éther phosphate Rhodafac® RS 710 ou RS 410
- le poly-oxy-éthylène oléocétyl éther phosphate Rhodafac® PA 35
- le poly-oxy-éthylène nonylphenyl éther phosphate Rhodafac® PA 17
- le poly-oxy-éthylène nonyl(ramifié) éther phosphate Rhodafac® RE 610.

Les dispersions de l'invention comprennent en outre une phase liquide qui est une phase organique et dans laquelle les particules sont en suspension

A titre d'exemple de phase organique, on peut citer les hydrocarbures aliphatiques comme l'hexane, l'heptane, l'octane, le nonane, les hydrocarbures cycloaliphatiques inertes tels que le cyclohexane, le cyclopentane, le cycloheptane, les hydrocarbures aromatiques tels que le benzène, le toluène, l'éthylbenzène, les xylènes, les naphtènes liquides. Conviennent également les coupes pétrolières du type Isopar ou Solvesso (marques déposées par la Société EXXON), notamment Solvesso 100 qui contient essentiellement un mélange de méthyléthyl- et triméthyl-benzène, le Solvesso 150 qui renferme un mélange d'alcoylbenzènes en particulier de diméthylbenzène et de tétraméthylbenzène et l'Isopar qui contient essentiellement des hydrocarbures iso- et cyclo-paraffiniques en C-11 et C-12. On peut aussi citer, comme autres coupes pétrolières, celles de type Petrolink^{®} de la société Petrolink ou de type Isane^{®} de la société Total.

On peut mettre en oeuvre également pour la phase organique des hydrocarbures chlorés tels que le chloro- ou le dichloro-benzène, le chlorotoluène. Les éthers ainsi que les cétones aliphatiques et cycloaliphatiques comme par exemple l'éther de diisopropyle, l'éther de dibutyle, la méthyléthylcétone, la méthylisobutylcétone, la diisobutylcétone, l'oxyde de mésityle, peuvent être envisagés.

Les esters peuvent être envisagés, mais ils présentent l'inconvénient de risquer d'être hydrolysés. On peut citer comme esters susceptibles d'être utilisés ceux issus de la réaction d'acides avec des alcools en C1 à C8 et notamment les palmitates d'alcools secondaires tel l'isopropanol. On peut mentionner l'acétate de butyle à titre d'exemple.

Bien entendu, la phase organique peut être à base d'un mélange de deux ou plusieurs hydrocarbures ou composés du type décrit ci-dessus.

Les dispersions selon l'invention présentent une concentration en composé(s) de terre(s) rare(s) et, le cas échéant, en élément E, qui généralement peut aller jusqu'à 40 % en poids d'oxyde(s) de terre(s) rare(s) et d'oxyde d'élément E par rapport au poids total de la dispersion. Au-delà de 40% la viscosité de la dispersion risque d'être trop élevée, notamment à basse température. Il est préférable toutefois que cette concentration soit d'au moins 5%. Des concentrations inférieures sont économiquement moins intéressantes à cause du volume de phase liquide qui devient trop important.

La proportion entre la phase organique et le ou les acides n'est pas critique. Le rapport pondéral entre la phase organique et le ou les acides est choisi, de préférence, entre 0,3 et 2,0.

Les dispersions de l'invention peuvent en outre se présenter selon divers modes de réalisation spécifiques.

Ainsi, selon un premier mode, la dispersion est telle qu'au moins 90 % des particules sont monocristallines. On entend par particules " monocristallines ", des particules qui apparaissent individualisées et constituées d'un seul cristallite lorsque l'on examine la dispersion par MET (microscopie électronique à transmission haute résolution).

On peut aussi utiliser la technique de cryo-MET pour déterminer l'état d'agrégation des particules élémentaires. Elle permet d'observer par microscopie électronique à transmission (MET) des échantillons maintenus congelés dans leur milieu naturel qui est soit de l'eau soit des diluants organiques tels que les solvants aromatiques ou aliphatiques comme par exemple le Solvesso et l'Isopar ou bien certains alcools tel que l'éthanol.

La congélation s'effectue sur des films minces d'environ 50 à 100 nm d'épaisseur soit dans l'éthane liquide pour les échantillons aqueux soit dans l'azote liquide pour les autres.

Par cryo-MET l'état de dispersion des particules est bien préservé et représentatif de celui présent dans le milieu réel.

Selon ce mode de réalisation, les particules présentent une granulométrie fine et resserrée. En effet, elles présentent un d₅₀ compris entre 1 et 5 nm, de préférence entre 2 et 3 nm.

Dans la présente description, les caractéristiques de granulométrie font référence à des notations du type dₙ où n est un nombre de 1 à 99. Cette notation représente la taille des particules telle que n % en nombre desdites particules ait une taille inférieure ou égale à ladite taille. Par exemple, un d₅₀ de 3 nanomètres signifie que 50 % en nombre des particules ont une taille inférieure ou égale à 3 nanomètres.

La granulométrie est déterminée par microscopie électronique à transmission (MET), de manière classique, sur un échantillon préalablement séché sur une membrane de carbone supportée sur grille de cuivre.

Cette technique de préparation est préférée car elle permet une meilleure précision de la mesure de la taille des particules. Les zones choisies pour les mesures sont celles qui présentent un état de dispersion semblable à celui observé en cryo-MET.

Les dispersions selon le mode de réalisation qui vient d'être étudié sont décrites plus particulièrement dans EP-A-1210172 à l'enseignement duquel on pourra se référer.

Les dispersions de l'invention peuvent aussi se présenter selon un deuxième mode de réalisation plus particulier dans lequel les particules ont une taille d'au plus 200nm, ces dispersions présentant en outre au moins une des caractéristiques suivantes :
- (i) lesdites particules sont sous forme d'agglomérats de cristallites dont le d₈₀, avantageusement le d₉₀, est au plus égal à 5 nanomètres, 90% (en masse) des agglomérats comportant de 1 à 5, de préférence de 1 à 3 cristallites;
- (ii) l'acide est un acide amphiphile comportant au moins un acide de 11 à 50 atomes de carbone, présentant au moins une ramification en alpha, bêta, gamma ou delta de l'atome porteur de l'hydrogène acide.

Pour les dispersions vérifiant la caractéristique (ii) ci-dessus, les tailles des particules peuvent être moins spécifiques ou différentes de celles données pour les dispersions vérifiant la caractéristique (i). Ainsi, le d₈₀, avantageusement le d₉₀, des particules constituées d'agglomérats de cristallites, peut être au plus égal à 10 nanomètres et plus particulièrement au plus égal à 8 nanomètres. Les cristallites qui constituent les agglomérats et donc les particules ont une taille au plus égale à 5 nanomètres. Cependant, les dispersions vérifiant la caractéristique (ii) peuvent présenter éventuellement en outre les caractéristiques relatives à la constitution et la taille des particules qui ont été mentionnées précédemment dans le cas (i).

Pour les deux cas considérés et selon une autre variante, 80% (en masse) des agglomérats comportent de 3 à 4 cristallites.

En ce qui concerne plus précisément l'acide amphiphile de la caractéristique (ii) il s'agit d'un système acide amphiphile plus spécifique à base d'un ou plusieurs acides répondant à la caractéristique (ii). Le domaine préféré est de 15 à 25 atomes de carbone pour les acides dudit système amphiphile. Pour obtenir de meilleurs résultats, surtout quand la longueur de chaîne est faible (inférieure à 14 atomes de carbone), lorsque la ramification est unique et surtout lorsqu'elle est située en position gamma ou delta de l'atome porteur de l'hydrogène acide, il est très souhaitable que cette ramification soit d'au moins deux atomes de carbone, avantageusement trois.

On préfère que la partie linéaire la plus longue soit d'au moins 6, de préférence 8 carbones.

Il est avantageux que le pKa d'au moins un des acides soit au plus égal à 5, de préférence à 4,5.

Il est également avantageux que la ou les chaîne(s) latérale(s) des acides ramifiés comportent au moins deux atomes, de préférence trois atomes de carbone.

On peut citer comme acides particulièrement intéressants les acides constitutifs du mélange d'acides connu sous le nom d'acide isostéarique.

La quantité d'acide amphiphile mise en oeuvre exprimée en nombre de moles d'acide par mole d'oxyde de terre rare peut varier dans de larges limites par exemple entre 1/10 et 1 mole par mole d'oxyde de terre rare. La borne supérieure ne présente pas de caractère critique mais il n'est pas nécessaire de mettre en jeu davantage d'acide. D'une manière préférentielle, l'acide amphiphile est mis en oeuvre à raison de 1/5 à 4/5 mole par mole d'oxyde de terre rare. Ce rapport molaire est calculé ici en prenant comme mole d'acide amphiphile, le nombre de mole multiplié par le nombre n de fonctions acides utiles. Plus précisément le nombre d'équivalents d'acide représente le nombre de molécules d'acide lorsque l'acide utilisé est monofonctionnel, et il faut doubler ou tripler ce nombre, dans le cas de diacides ou triacides et, plus généralement, le multiplier par le nombre de fonctions acides dans le cas d'un polyacide.

Dans ce mode de réalisation, comme dans le cas général, la proportion entre la phase organique et le ou les acides amphiphiles n'est pas critique. Le rapport pondéral entre la phase organique et le ou les acides amphiphiles est choisi, de préférence, entre 0,3 et 2,0.

Les dispersions selon ce second mode de réalisation sont décrites plus particulièrement dans EP-A-671205 à l'enseignement duquel on pourra aussi se référer.

Enfin, selon un troisième mode de réalisation, les dispersions peuvent comprendre des particules d'un composé de terre rare qui ont été obtenues par un procédé comportant les étapes ci-après :
a) on prépare une solution comprenant au moins un sel soluble, de préférence un acétate et/ou un chlorure, de terre rare;
b) on met en contact la solution avec un milieu basique et on maintient le mélange réactionnel ainsi formé à un pH basique;
c) on récupère le précipité formé par atomisation ou lyophilisation.

Les dispersions selon ce troisième mode de réalisation sont décrites plus particulièrement dans EP-A-862537 à l'enseignement duquel on pourra aussi se référer.

Selon la caractéristique essentielle de la dispersion de l'invention, celle-ci contient un agent anti-oxydant. On entend par là un agent qui est capable d'éviter l'oxydation de composés organiques notamment, cette oxydation pouvant se faire par exemple par attaque des doubles ou triples liaisons, des doubles liaisons conjuguées ou des fonctions alcools.

L'anti-oxydant peut être choisi tout d'abord parmi les dérivés substitués du phénol, ces dérivés pouvant être du type monophénol ou polyphénol ou encore du type hydroquinone.

Dans le cas des dérivés du type monophénol, il s'agit par exemple de produits du type alkyl- ou alcoxy-phénol, de formule (R')(R)(R)O(OH) dans laquelle R et R' sont des radicaux alkyl ou alcoxylé comme le tertiobutyl, le méthyl ou le radical méthoxy et Φ est le noyau benzénique.

On peut citer comme exemples non limitatifs le 2,6 di-tertiobutyl phénol, le 2,6 di-tertiobutyl paracrésol (ou 2,6-di-tertiobutyl-4-méthylphénol), ou le 2-tertiobutyl-4-méthoxyphénol. On peut aussi citer l'octadécyl-3,5-di-t-butyl-4-hydroxyhydrocinnamate.

Pour les dérivés de type polyphénol, on peut citer tout d'abord les bisphénols par exemple les 2,2'-méthylenebis(6-t-butyl-p-crésol), 4,4'-butylidenebis(6-t-butyl-m-crésol).

Les polyphénols peuvent répondre notamment à la formule (R)(OH)(CH₃)Φ-R'-Φ(R)(OH)(CH₃) dans laquelle R est un radical alkyl comme le tertiobutyl, R' est un radical de type (CH₂)ₙ comme le méthylène et Φ est le noyau benzénique. On peut citer aussi le produit butylé de la réaction du p-crésol et du dicyclopentadiène.

En ce qui concerne les hydroquinones, on peut citer par exemple les 2,5-di-t-amylhydroquinone et t-butylhydroquinone.

L'anti-oxydant peut aussi être choisi parmi les amines aromatiques.

On peut mentionner notamment les p-phénylènediamines de formule RHN-Φ-NR'H dans laquelle R est un radical alkyl comme le 1,3 diméthylbutyl et R' est un radical phényl. On peut citer plus particulièrement les N-phényl-N'(1,3-diméthylbutyl)-p-phénylènediamine, N-phényl-N'-isopropyl-p-phénylènediamine, N,N'-diphényl-p-phénylènediamine, N,N'-di-sec-butyl-p-phénylènediamine et le mélange diaryl(phényl/tolyl)-p- phénylènediamine.

Comme autres amines anti-oxydant, on peut aussi utiliser les triméthyldihydroquinolines comme la 6-éthoxy-2,2,4-triméthyl-1,2-dihydroquinoline ou la 2,2,4-triméthyl-1,2-dihydroquinoline sous forme polymérisée.

On peut aussi mentionner les diphénylamines alkylées de formule RΦ-NH-ΦR dans laquelle R est un radical alkyl, par exemple octyl. A titre d'exemple pour ces produits on peut citer les octyldiphénylamine et nonyldiphénylamine.

Conviennent aussi les produits de condensation d'amines et de l'acétone et d'amines et d'aldéhydes comme le produit de condensation de la diphényl amine et de l'acétone.

On peut mentionner enfin des amines comme le p-anilinophénol ou le 4,4'-di-sec-butylaminodiphénylméthane.

Enfin, on peut utiliser aussi comme agent anti-oxydant les tocophérols.

Bien entendu, il est possible d'utiliser différents agents anti-oxydant en combinaison, notamment une combinaison d'un agent de chacune des deux familles données ci-dessus.

Les dispersions de l'invention peuvent être obtenues par addition de l'agent anti-oxydant à des dispersions de départ telles que décrites plus haut. La quantité d'agent, exprimée par le rapport atomique antioxydant/(terre rare + élément E) peut être comprise entre 0,1 et 5, plus particulièrement entre 0,2 et 3 et encore plus particulièrement entre 0,5 et 2.

Les dispersions colloïdales organiques qui viennent d'être décrites peuvent être employées comme adjuvant de carburant pour moteurs à combustion interne, plus particulièrement comme adjuvant des gazoles pour moteur diesel.

Enfin, l'invention concerne un carburant pour moteurs à combustion interne qui contient une dispersion colloïdale du type de celle qui a été décrite plus haut. Ce carburant s'obtient par mélange avec la dispersion de l'invention.

Comme indiqué plus haut, l'utilisation de la dispersion de l'invention dans le carburant confère aux particules du composé de terre rare une stabilité améliorée de ces particules dans le carburant, notamment le gazole, c'est à dire que celles-ci restent en suspension dans le carburant sans qu'il y ait formation d'une quantité significative d'un précipité. En outre, la dispersion présente toujours l'avantage de réduire la température d'auto-inflammation des suies.

Des exemples vont maintenant être donnés.

Dans ces exemples, on utilise comme dispersion colloïdale une dispersion organique (Isopar) de cérium et de fer préparée selon l'exemple 3 de WO 01/10545 avec un rapport atomique Ce/Fe de 1, une concentration en cérium (métal) et en fer (métal) de 6,5% et comprenant, comme agent anti-oxydant, le 2,6-di-tertiobutyl-4-méthylphénol.

On mélange ensuite avec un gazole la dispersion contenant ou non l'agent anti-oxydant et on fait vieillir ce mélange à différentes températures. A l'issue du vieillissement on filtre et on mesure la teneur en cérium du liquide par la technique de spectrométrie d'émission atomique par plasma induit (ICP-AES). L'appareil utilisé est un appareil Ultima de la société Jobin et Yvon.

### EXEMPLE 1

Cet exemple s'applique à un gazole de type « clear » commercialisé en Suède et comprenant un additif de lubrification OLI 9950 de la société Octel.
Ce gazole présente les caractéristiques suivantes :
Teneur en soufre : 2ppm
Point de départ de distillation : 180°C
Point final de distillation : 285°C
Densité : 814kg/m³
Indice de cétane : 54
% en volume en aromatiques : 4%.

Les quantités de gazole et de dispersion sont telles que la teneur en cérium initiale du mélange formé est de 7ppm. Les teneurs en anti-oxydant sont celles mesurées dans le mélange gazole/dispersion.

On donne dans le tableau 1 ci-dessous les résultats obtenus.

**Tableau 1**

| Vieillissement Durée/température | Sans anti-oxydant | Avec 20ppm d'anti-oxydant | Avec 50ppm d'anti-oxydant |
|---|---|---|---|
| 12h/80°C | 4,7 | 6,9 | 6,2 |
| 3h/90°C | 2,7 | 6,9 | 6,4 |
| 3h/120°C | 2,0 | 7,0 | 6,8 |

On voit que lorsque l'anti-oxydant n'est pas présent, une grande quantité du cérium ne se retrouve plus dans la phase liquide ce qui indique que celui-ci a précipité en grande partie lors du vieillissement. Lorsque l'anti-oxydant est présent, on retrouve au contraire la totalité ou la quasi-totalité du cérium de départ, celui-ci est donc resté à l'état de dispersion colloïdale.

### EXEMPLES 2 A 8

Ces exemples s'appliquent à un gazole de type « clear » commercialisé en Allemagne et comprenant différents lubrifiants.
Ce gazole présente les caractéristiques suivantes :
Teneur en soufre : 40ppm
Point de départ de distillation : 180°C
Point final de distillation : 360°C
Densité : 840kg/m³
Indice de cétane : 51
% en volume en aromatiques : 20%.

Les teneurs respectives en cérium et en anti-oxydant du mélange formé gazole/dispersion sont respectivement de 7ppm et 10ppm.

On donne dans le tableau 2 ci-dessous les résultats obtenus. Les valeurs données aux lignes "comparatif" correspondent au cas où la dispersion ne contient pas d'anti-oxydant.

**Tableau 2**

| Exemple | 2 | 3 | 4 | 5 | 6 | 7 | 8 |
|---|---|---|---|---|---|---|---|
| Quantité de lubrifiant (ppm) | 320 | 200 | 200 | 290 | 110 | 300 | 200 |
| Vieillissement Durée/température | | | | | | | |
| 12h/80°C Comparatif Invention | 0,7 | 4,9 | 4,9 | 0 | 3,7 | 3,4 | 0 |
| | 6,6 | 6,2 | 7,9 | 6,2 | 6,3 | 7 | 6,2 |
| 3h/90°C Comparatif Invention | 0 | 5,75 | 0 | 0 | 0 | 0 | 0 |
| | 7 | 6,7 | 6,1 | 6,4 | 7,4 | 6,3 | 6,3 |
| 3h/110°C Comparatif Invention | 0 | 0 | 0 | 0 | 0 | 0 | 0 |
| | 7,0 | 6,8 | 6,0 | 6,5 | 6,2 | 6,7 | 5,0 |

Type de lubrifiant utilisé :
Exemple 2: PC 32
Exemple 3 : R 655
Exemple 4 : R 639
Exemple 5 : R 650
Exemple 6 : Hitec 4848 A
Exemple 7 : Hitec 4140 A
Exemple 8 : Kerokor LA 99

On constate, là aussi, que lorsque l'anti-oxydant est présent, la plus grande partie du cérium de départ se trouve toujours à l'état de dispersion colloïdale ce qui n'est pas le cas en l'absence d'anti-oxydant.

## Revendications

1. Dispersion colloïdale comprenant des particules d'un composé d'une terre rare, un acide et une phase organique, **caractérisée en ce qu'**elle comprend en outre un agent anti-oxydant.

2. Dispersion selon la revendication 1, **caractérisée en ce que** l'agent anti-oxydant est choisi parmi les dérivés substitués du phénol, notamment les alkyl- ou alcoxy-phénol.

3. Dispersion selon la revendication 2, **caractérisée en ce que** l'agent anti-oxydant est choisi parmi le 2,6 di-tertiobutyl phénol, le 2,6 di-tertiobutyl paracrésol, ou le 2-tertiobutyl-4-méthoxyphénol.

4. Dispersion selon la revendication 1, **caractérisée en ce que** l'agent anti-oxydant est choisi parmi les amines aromatiques.

5. Dispersion selon la revendication 1, **caractérisée en ce que** l'agent anti-oxydant est choisi parmi les tocophérols.

6. Dispersion selon l'une des revendications précédentes, **caractérisée en ce que** la terre rare est choisie parmi le cérium, le lanthane, l'yttrium, le néodyme, le gadolinium, le praséodyme.

7. Dispersion selon l'une des revendications précédentes, **caractérisée en ce qu'**elle comporte au moins un autre élément (E) choisi dans les groupes IIA, IVA, VIIA, VIII, IB, IIB, IIIB et IVB de la classification périodique des éléments.

8. Dispersion selon l'une des revendications précédentes, **caractérisée en ce que** l'acide est un acide amphiphile.

9. Dispersion selon l'une des revendications précédentes **caractérisée en ce qu'**au moins 90 % des particules sont monocristallines.

10. Dispersion selon la revendication 9, **caractérisée en ce que** les particules présentent un d₅₀ compris entre 1 et 5 nm, de préférence entre 2 et 3 nm.

11. Dispersion selon l'une des revendications 1 à 8, **caractérisée en ce qu'**elle comprend des particules dont la taille est d'au plus 200nm et **en ce qu'**elle présente en outre au moins une des caractéristiques suivantes :
- lesdites particules sont sous forme d'agglomérats de cristallites dont le d₈₀, avantageusement le d₉₀, est au plus égal à 5 nanomètres, 90% (en masse) des agglomérats comportant de 1 à 5, de préférence de 1 à 3 cristallites;
- l'acide est un acide amphiphile comportant au moins un acide de 11 à 50 atomes de carbone, présentant au moins une ramification en alpha, bêta, gamma ou delta de l'atome porteur de l'hydrogène acide.

12. Dispersion selon l'une des revendications 1 à 8, **caractérisée en ce qu'**elle comprend des particules d'un composé de terre rare qui ont été obtenues par un procédé comportant les étapes ci-après :
a) on prépare une solution comprenant au moins un sel soluble, de préférence un acétate et/ou un chlorure, de terre rare;
b) on met en contact la solution avec un milieu basique et on maintient le mélange réactionnel ainsi formé à un pH basique;
c) on récupère le précipité formé par atomisation ou lyophilisation.

13. Dispersion selon l'une des revendications précédentes, **caractérisée en ce que** l'acide est choisi parmi les acides gras de tallol, d'huile de soja, de suif, d'huile de lin, l'acide oléique, l'acide linoléique, l'acide stéarique et ses isomères, l'acide pélargonique, l'acide caprique, l'acide laurique, l'acide myristique, l'acide dodécylbenzènesulfonique, l'acide éthyl-2 hexanoïque, l'acide naphténique, l'acide hexoïque, l'acide toluène sulfonique, l'acide toluène phosphonique, l'acide lauryl sulfonique, l'acide lauryl phosphonique, l'acide palmityl sulfonique, et l'acide palmityl phosphonique.

14. Utilisation d'une dispersion colloïdale selon l'une quelconque des revendications 1 à 13, comme adjuvant de carburants pour moteurs à combustion interne à stabilité améliorée des particules du composé de terre rare.

15. Carburant pour moteur à combustion interne, **caractérisé en ce qu'**il est obtenu par mélange à un carburant usuel d'une dispersion colloïdale selon l'une quelconque des revendications 1 à 13.

## Claims

1. A colloidal dispersion comprising particles of a rare earth compound, an acid and an organic phase, **characterized in that** it further comprises an antioxidant.

2. The dispersion as claimed in claim 1, **characterized in that** the antioxidant is selected from the substituted derivatives of phenol, particularly alkyl- or alkoxyphenol.

3. The dispersion as claimed in claim 2, **characterized in that** the antioxidant is selected from 2,6-di-*tert*-butylphenol, 2,6-di-*tert*-butyl paracresol, or 2-*tert*-butyl-4-methoxyphenol.

4. The dispersion as claimed in claim 1, **characterized in that** the antioxidant is selected from aromatic amines.

5. The dispersion as claimed in claim 1, **characterized in that** the antioxidant is selected from tocopherols.

6. The dispersion as claimed in one of the preceding claims, **characterized in that** the rare earth is selected from cerium, lanthanum, yttrium, neodymium, gadolinium, and praseodymium.

7. The dispersion as claimed in one of the preceding claims, **characterized in that** it comprises at least one other element (E) selected from the groups IIA, IVA, VIIA, VIII, IB, IIB, IIIB and IVB of the Periodic Table of the Elements.

8. The dispersion as claimed in one of the preceding claims, **characterized in that** the acid is an amphiphilic acid.

9. The dispersion as claimed in one of the preceding claims, **characterized in that** at least 90% of the particles are monocrystalline.

10. The dispersion as claimed in claim 9, **characterized in that** the particles have a d₅₀ of between 1 and 5 nm, preferably between 2 and 3 nm.

11. The dispersion as claimed in one of claims 1 to 8, **characterized in that** it comprises particles not larger than 200 nm and **in that** it also has at least one of the following characteristics:
- said particles are in the form of aggregates of crystallites of which the d₈₀, advantageously the d₉₀, is not more than 5 nanometers, 90% (by mass) of the aggregates comprising 1 to 5, preferably 1 to 3 crystallites;
- the acid is an amphiphilic acid comprising at least one acid with 11 to 50 carbon atoms, having at least one alpha, beta, gamma, or delta branch of the atom bearing the acidic hydrogen.

12. The dispersion as claimed in one of claims 1 to 8, **characterized in that** it comprises particles of a rare earth compound that have been obtained by a method comprising the following steps:
a) a solution is prepared comprising at least one soluble salt, preferably a rare earth acetate and/or chloride;
b) the solution is contacted with a basic medium and the reaction mixture thus formed is maintained at a basic pH;
c) the precipitate formed is recovered by spraying or freeze-drying.

13. The dispersion as claimed in one of the preceding claims, **characterized in that** the acid is selected from fatty acids of tallol, soybean oil, tallow, linseed oil, oleic acid, linoleic acid, stearic acid and isomers thereof, pelargonic acid, capric acid, lauric acid, myristic acid, dodecylbenzenesulfonic acid, ethyl-2-hexanoic acid, naphthenic acid, hexoic acid, toluenesulfonic acid, toluenephosphonic acid, laurylsulfonic acid, laurylphosphonic acid, palmitylsulfonic acid, and palmitylphosphonic acid.

14. The use of a colloidal dispersion according to any one of claims 1 to 13, as an additive for fuels for internal combustion engines with enhanced stability of the particles of the rare earth compound.

15. A fuel for an internal combustion engine, **characterized in that** it is obtained by mixing a colloidal dispersion according to any one of claims 1 to 13 with a conventional fuel.

## Patentansprüche

1. Kolloidale Dispersion, enthaltend Teilchen einer Seltenerdmetallverbindung, eine Säure und eine organische Phase, **dadurch gekennzeichnet, daß** sie außerdem ein Antioxidans enthält.

2. Dispersion nach Anspruch 1, **dadurch gekennzeichnet, daß** das Antioxidans aus substituierten Phenolderivaten, insbesondere Alkyl- oder Alkoxyphenol, ausgewählt ist.

3. Dispersion nach Anspruch 2, **dadurch gekennzeichnet, daß** das Antioxidans aus 2,6-Di-tert.-butylphenol, 2,6-Di-tert.-butyl-para-kresol oder 2-tert.-Butyl-4-methoxyphenol ausgewählt ist.

4. Dispersion nach Anspruch 1, **dadurch gekennzeichnet, daß** das Antioxidans aus aromatischen Aminen ausgewählt ist.

5. Dispersion nach Anspruch 1, **dadurch gekennzeichnet, daß** das Antioxidans aus Tocopherolen ausgewählt ist.

6. Dispersion nach einem der vorhergehenden Ansprüche, **dadurch gekennzeichnet, daß** das Seltenerdmetall aus Cer, Lanthan, Yttrium, Neodym, Gadolinium und Praseodym ausgewählt ist.

7. Dispersion nach einem der vorhergehenden Ansprüche, **dadurch gekennzeichnet, daß** sie mindestens ein anderes Element (E), das aus den Gruppen IIA, IVA, VIIA, VIII, IB, IIB, IIIB und IVB des Periodensystems der Elemente ausgewählt ist, enthält.

8. Dispersion nach einem der vorhergehenden Ansprüche, **dadurch gekennzeichnet, daß** es sich bei der Säure um eine amphiphile Säure handelt.

9. Dispersion nach einem der vorhergehenden Ansprüche, **dadurch gekennzeichnet, daß** mindestens 90% der Teilchen monokristallin sind.

10. Dispersion nach Anspruch 9, **dadurch gekennzeichnet, daß** die Teilchen einen d₅₀-Wert zwischen 1 und 5 nm, vorzugsweise zwischen 2 und 3 nm, aufweisen.

11. Dispersion nach einem der Ansprüche 1 bis 8, **dadurch gekennzeichnet, daß** sie Teilchen enthält, deren Größe höchstens 200 nm beträgt, und daß sie außerdem mindestens eines der folgenden Merkmale aufweist:
- die Teilchen liegen in Form von Agglomeraten von Kristalliten vor, deren d₈₀-Wert, vorteilhafterweise d₉₀-Wert, höchstens 5 Nanometer beträgt, wobei 90% (bezogen auf das Gewicht) der Agglomerate 1 bis 5 Kristallite, vorzugsweise 1 bis 3 Kristallite, enthalten;
- die Säure ist eine amphiphile Säure, die mindestens eine Säure mit 11 bis 50 Kohlenstoffatomen mit mindestens einer Verzweigung in alpha-, beta-, gamma- oder delta-Stellung zu dem das saure Wasserstoffatom enthaltenden Atom umfaßt.

12. Dispersion nach einem der Ansprüche 1 bis 8, **dadurch gekennzeichnet, daß** sie Teilchen einer Seltenerdmetallverbindung enthält, die durch ein Verfahren erhalten werden, bei dem man:
a) eine Lösung herstellt, die ein lösliches Seltenerdmetallsalz, vorzugsweise ein Seltenerdmetallacetat und/oder -chlorid, enthält;
b) die Lösung mit einem basischen Medium in Berührung bringt und die so gebildete Reaktionsmischung bei einem basischen pH-Wert hält;
c) den gebildeten Niederschlag durch Zerstäuben oder Lyophilisieren gewinnt.

13. Dispersion nach einem der vorhergehenden Ansprüche, **dadurch gekennzeichnet, daß** die Säure aus Fettsäuren von Tallol, Sojaöl, Talg, Leinsamenöl, Ölsäure, Linolsäure, Stearinsäure und ihren Isomeren, Pelargonsäure, Caprinsäure, Laurinsäure, Myristinsäure, Dodecylbenzolsulfonsäure, Ethyl-2-hexansäure, Naphthensäure, Hexansäure, Toluolsulfonsäure, Toluolphosphonsäure, Laurylsulfonsäure, Laurylphosphonsäure, Palmitylsulfonsäure und Palmitylphosphonsäure ausgewählt ist.

14. Verwendung einer kolloidalen Dispersion nach einem der Ansprüche 1 bis 13 als Hilfsstoff für Kraftstoff für Verbrennungskraftmaschinen mit verbesserter Stabilität der Teilchen der Seltenerdmetallverbindung.

15. Kraftstoff für Verbrennungskraftmaschinen, **dadurch gekennzeichnet, daß** er durch Mischen einer kolloidalen Dispersion nach einem der Ansprüche 1 bis 13 mit einem herkömmlichen Kraftstoff erhalten worden ist.
